# EUROPÄISCHE PATENTSCHRIFT

(11) **EP 3 490 770 B1**
(45) Veröffentlichungstag und Bekanntmachung des Hinweises auf die Patenterteilung: **10.09.2025**
(21) Anmeldenummer: 17748697.4
(22) Anmeldetag: 25.07.2017
(51) Int. Cl.: B29C 39/10, B05C 5/02, B05C 13/02, B29C 31/04, B29C 31/06

(54) **VERFAHREN UND VORRICHTUNG ZUM BEFÜLLEN VON DICHTKAPPEN**
METHOD AND APPARATUS FOR FILLING SEAL CAPS
PROCÉDÉ ET APPAREIL DE REMPLISSAGE DE BOUCHONS ÉTANCHES

(30) Priorität: 26.07.2016 DE 102016213669; 02.08.2016 DE 102016214201
(43) Veröffentlichungstag der Anmeldung: 05.06.2019
(73) Patentinhaber: Chemetall GmbH, 60487 Frankfurt (DE)
(72) Erfinder: BUROCK, Heinz, 60487 Frankfurt am Main (DE)
(74) Vertreter: BASF IP Association
(86) Internationale Anmeldenummer: PCT/EP2017/068793
(87) Internationale Veröffentlichungsnummer: WO 2018/019848

(56) Entgegenhaltungen:
- EP-A1- 2 604 893
- EP-A1- 2 604 893
- EP-B1- 2 604 893
- WO-A1-2014/201188
- WO-A1-2014/201188
- WO-A2-2012/118855
- WO-A2-2012/118855
- CN-U- 202 721 126
- US-A- 6 001 181
- ANONYMOUS: "Dispensing Automation", FISNAR ROBOTICS, 17 June 2015 (2015-06-17), pages 1 - 28, XP055417680, Retrieved from the Internet <URL:http://www.fisnar.com/_media/Catalogs/RC-V2_REV2.pdf> [retrieved on 20171020]
- ANONYMOUS: "Aerospace Dispense Systems For Automated Cartridge Dispensing, Advanced Structural Bonding and More", 15 May 2015 (2015-05-15), www.sealantequipment.com, pages 1 - 5, XP055417666, Retrieved from the Internet <URL:http://www.sealantequipment.com/pdf/aerospace/Nordson Sealant Equipment Aerospace Dispense Systems Brochure 2015-rev1.pdf> [retrieved on 20171020]
- LIQUIDCONTROL1971: "Liquid Control Limited - WR300OPT XYZ Robot", YOUTUBE, 25 November 2010 (2010-11-25), pages 1 pp., XP054977807, Retrieved from the Internet <URL:https://www.youtube.com/watch?v=AAXTGOONvXI> [retrieved on 20171020]
- FISNAR INC.: "Manual to automated dispensing comparison.", YOUTUBE, 5 November 2009 (2009-11-05), pages 1 pp., XP054977809, Retrieved from the Internet <URL:https://www.youtube.com/watch?v=S_dcaMUc2rY&list=PLlWI0C87f7ec1OSxxwwswIiO7JCeRHWcP> [retrieved on 20171020]
- PARKER: "Motion Solutions For Food Processing and Packaging Machinery", 28 December 2012 (2012-12-28), pages 1 - 16, XP055808786, Retrieved from the Internet <URL:https://irp-cdn.multiscreensite.com/35aa1605/docs/1.659515..pdf> [retrieved on 20210528]
- ANONYMOUS: "Dispensing Automation", FISNAR ROBOTICS, 17 June 2015 (2015-06-17), pages 1 - 28, XP055417680, Retrieved from the Internet <URL:http://www.fisnar.com/_media/Catalogs/RC-V2_REV2.pdf> [retrieved on 20171020]
- ANONYMOUS: "Aerospace Dispense Systems For Automated Cartridge Dispensing, Advanced Structural Bonding and More", 15 May 2015 (2015-05-15), www.sealantequipment.com, pages 1 - 5, XP055417666, Retrieved from the Internet <URL:http://www.sealantequipment.com/pdf/aerospace/Nordson Sealant Equipment Aerospace Dispense Systems Brochure 2015-rev1.pdf> [retrieved on 20171020]
- LIQUIDCONTROL1971: "Liquid Control Limited - WR300OPT XYZ Robot", YOUTUBE, 25 November 2010 (2010-11-25), pages 1 pp., XP054977807, Retrieved from the Internet <URL:https://www.youtube.com/watch?v=AAXTGOONvXI> [retrieved on 20171020]
- FISNAR INC.: "Manual to automated dispensing comparison.", YOUTUBE, 5 November 2009 (2009-11-05), pages 1 pp., XP054977809, Retrieved from the Internet <URL:https://www.youtube.com/watch?v=S_dcaMUc2rY&list=PLlWI0C87f7ec1OSxxwwswIiO7JCeRHWcP> [retrieved on 20171020]

## Beschreibung

Gegenstand der vorliegenden Erfindung ist ein Verfahren zum Befüllen von Dichtkappen (Sealcaps), sowie eine entsprechende automatisierte Vorrichtung.

In der Flugzeugindustrie werden Nieten oder Nietköpfe üblicherweise mit einem Dichtmittel (Dichtmasse) bzw. im ausgehärteten Zustand einer Dichtkappe (Sealcap) überzogen, um sie abzudichten oder vor Korrosion zu schützen. Das Aufbringen des Dichtmittels wird in der Regel manuell, beispielsweise mit händisch geführten Kartuschenpistolen durchgeführt. WO 2014/201188 A1 beschreibt ein verbessertes Verfahren zum Auftragen von Dichtungsmasse auf die Rückseite von Befestigungselementen.

Als Alternative dazu können auch aus Dichtmittel hergestellte, aber bereits ausgehärtete Dichtkappen verwendet werden, die in entsprechender Kontur der Niete bzw. des Nietkopfes angeboten werden. Diese ausgehärteten Dichtkappen können dann unterschiedlich weiterverwendet werden:
Einerseits können die ausgehärteten Dichtkappen mit frischer Dichtmasse gefüllt und tiefgefroren werden um eine Reaktion der Dichtmasse zu verhindern. Kurz vor dem Gebrauch werden die Kappen aufgetaut und sind dann gebrauchsfertig. Dieses Verfahren hat jedoch den Nachteil, dass die mit gefrorener Dichtmasse gefüllten Dichtkappen nur begrenzt lagerfähig sind, vor dem Gebrauch erst konditioniert werden müssen und darüber hinaus die Gefahr der Betauung besteht. Ein weiterer Nachteil besteht in der Logistikkette, die einen zügigen Transport sowie die Bereitstellung von Tiefkühltruhen voraussetzt.

Andererseits können die Dichtkappen auch direkt vor der Anwendung manuell mittels einer Kartuschenpistole mit Dichtmasse befüllt werden, um sie dann zu verarbeiten. Dieses Verfahren kann jedoch kein gleichmäßiges Befüllen der Dichtkappen gewährleisten, da sie nicht in diesem Prozessschritt verwogen werden können. Die eingespritzte Menge kann deshalb auch über oder unterdosiert sein. Diese Vorgehensweise ist außerdem sehr zeitaufwendig und umständlich, da gleichzeitig mit Kartuschenpistole und Dichtmassenkappe umzugehen ist, und die Kappe zeitnah aufgesetzt werden muss.

Die Aufgabe der vorliegenden Erfindung war es deshalb, ein Verfahren zum Befüllen der Dichtkappen bereitzustellen, welches die vorgenannten Nachteile nicht aufweist. Das Befüllen der Dichtkappen mit Dichtmasse soll dabei insbesondere zeitsparend aber mit hoher Qualität erfolgen und gleichzeitig eine Kostenreduktion zur Folge haben.

Die zugrundeliegende Aufgabe der vorliegenden Erfindung wird durch das Verfahren nach Anspruch 1 gelöst. Bevorzugte Ausführungsformen sind in den Unteransprüchen angegeben. Das erfindungsgemäße Verfahren kann eingesetzt werden, um bereits ausgehärtete Dichtkappen zu befüllen. Dabei kann die befüllte Dichtmasse wie oben beschrieben eingefroren werden, um nach einer bestimmten Lagerdauer verwendet zu werden, oder wie ebenfalls oben ausgeführt wurde kurz vor dem Aufsetzen der Dichtkappe befüllt werden. Vorzugsweise werden die Dichtkappen nicht eingefroren, sondern kurz vor dem Aufsetzen befüllt, wodurch sich die Kosten reduzieren lassen, weil keine Tiefkühltruhen bereitgestellt werden müssen und auch keine Kühlkette aufrechterhalten werden muss.

Bei dem erfindungsgemäßen Verfahren zum Befüllen von Dichtkappen (Sealcaps) wird die Befüllung der Dichtkappen automatisiert durchgeführt, wobei die Positionierung der Befülleinheit und/oder die Positionierung der ausgehärteten Dichtkappen mittels Bewegung in XYZ-Richtung sowie das Befüllen der Dichtkappen automatisiert erfolgt und wobei die ausgehärteten Dichtkappen auf einer Trägerplatte positioniert sind. Gegenüber dem bekannten manuellen Befüllen der Dichtkappen ergibt sich dadurch eine Zeitersparnis von bis zu 100%.

Die Automatisierung des Befüllvorgangs erfolgt dabei beipsielsweise softwaregesteuert, in dem entweder die auf der Trägerplatte befindlichen Dichtkappen und/oder die Befülleinheit der Vorrichtung, aus der die Dichtmasse in die Dichtkappe eingefüllt wird, in X-, Y- oder Z-Richtung bewegt werden. Vorzugsweise wird dazu ein Roboter oder eine ähnliche Vorrichtung mit XYZ-Fahrweg verwendet, die es ermöglichen, dass entweder die Trägerplatte mitsamt der Dichtkappen und/oder die Befülleinheit automatisiert bewegt werden, um bei richtiger Positionierung die Dichtmasse einzufüllen.

In einer weiterhin bevorzugten Ausführungsform kann das erfindungsgemäße Verfahren auch das automatisierte Aufsetzen nach dem Befüllen der Dichtkappe umfassen.

Die zugrundeliegende Aufgabe der vorliegenden Erfindung wird außerdem durch die Vorrichtung nach Anspruch 10 gelöst.

Erfindungsgemäß umfasst eine derartige Vorrichtung bzw. ein derartiger Roboter
- eine Befülleinheit mit der die Dichtmasse in die Dichtkappe eingefüllt wird;
- eine Trägerplatte auf der sich die ausgehärteten Dichtkappen befinden;
- eine Verfahrwegeinheit mit der entweder die Befülleinheit und/oder die Trägerplatte bewegt werden können, vorzugsweise über eine entsprechende Motorisierung; und
- eine Steuereinheit mit der die Bewegung der Befülleinheit und/oder der Trägerplatte und das Befüllen reguliert werden, wobei jeweils die Verfahrwegeinheit und die Befülleinheit durch die Steuereinheit gesteuert werden.

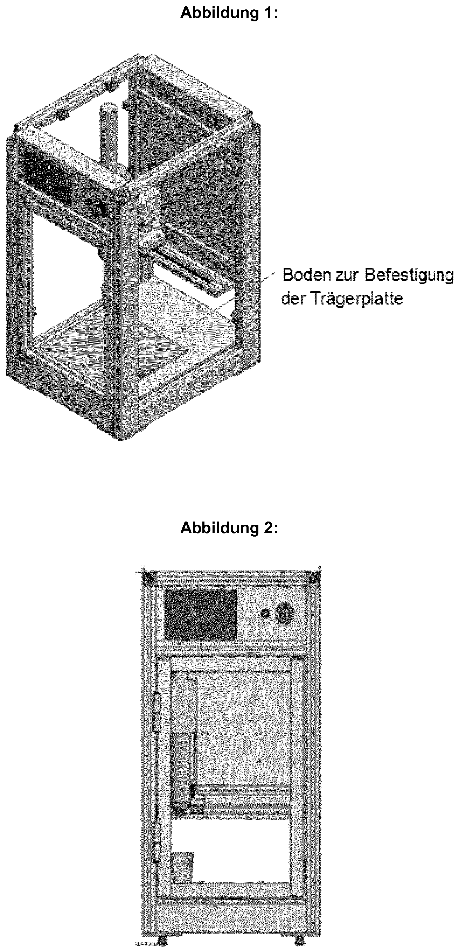

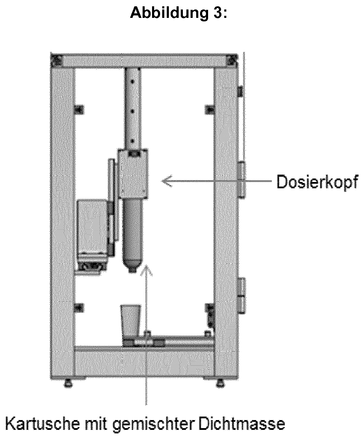

Ein Beispiel für einen entsprechenden Roboter ist in den **Abb. 1 bis 3** dargestellt.

**Abb. 1****:** Ansicht des Roboters von schräg oben. Erkennbar ist hier der Boden des Roboters, der zur Befestigung der Trägerplatte dient.

**Abb. 2****:** Vorderansicht des Roboters

**Abb. 3****:** Seitenansicht des Roboters. Die Befülleinheit umfasst hier eine Kartusche mit gemischter Dichtmasse, die an einem Dosierkopf befestigt ist.

Die Befülleinheit umfasst vorzugsweise eine Auspresseinheit mit der die Dichtmasse aus einem entsprechenden Behälter in die Dichtkappe gedrückt wird. Die erfindungsgemäße zu verwendende Vorrichtung umfasst insbesondere eine Kartuschenauspresseinheit mit Druckluftantrieb oder Servoantrieb als Befülleinheit, wobei mit fertiger Dichtmasse befüllte Kartuschen in die Auspresseinheit eingesetzt werden, aus denen dann die Dichtmasse beim Befüllen herausgepresst wird. Es ist jedoch auch möglich, dass die Auspresseinheit einen Mischbehälter umfasst, in den aus zwei unterschiedlichen Leitungen die beiden Komponenten eingefüllt und danach vermischt werden, um die Dichtmasse direkt vor dem Befüllen herzustellen.

Vorzugsweise weist die Kartuschenauspresseinheit einen Servoantrieb auf. Die Kartusche ist dabei mit der Dichtmasse befüllt und wird mittels eines über den Servoantrieb gesteurten Kolbens herausgedrückt. Besonders bevorzugt eignet sich der Servoantrieb für zwei verschiedene Kartuschengrößen, die in der Flugzeugindustrie gebräuchlich sind. Dadurch kann auf eine luftunterstützte Anpresseinheit verzichtet werden, wodurch sich komprimierbare Dichtmassen (Dichtmassen die keine Newton'sche Flüssigkeiten sind und die während des Herauspressens komprimiert werden) verwenden lassen.

In einer bevorzugten Ausführungsform der vorliegenden Erfindung ist die automatisierte Vorrichtung transportabel. Die Vorrichtung weist in diesem Fall also Maße und eine entsprechende Konfiguration auf, die einen schnellen Auf- und Abbau der Vorrichtung erlauben. Eine tragbare Vorrichtung erlaubt den Aufbau direkt beim Anwender, der dadurch die Dichtkappen ohne Zeitverzögerung auf die jeweilige Niete bzw. den Nietkopf aufsetzen kann.

Die deutliche Erhöhung der Prozessgeschwindigkeit durch das Befüllen mittels einer automatisierten Vorrichtung, beispielsweise einen geeigneten Robotersystem erlaubt zudem eine Erhöhung der Taktrate beim Flugzeugbau wenn die manuell ausgeführten Tätigkeiten beim Befüllen und Aufsetzen der Dichtkappen reduziert werden.

Bei der Verwendung eines geeigneten Robotersystems liegt die durchschnittliche Zeit für die Befüllung einer Dichtkappe mit Dichtmasse beispielsweise bei lediglich 2,5 Sekunden. Im Vergleich hierzu werden beim manuellen Befüllen im Schnitt beispielsweise ... Sekunden benötigt.

Die automatisierte Vorrichtung, vorzugsweise der Roboter kann die Dichtmasse in einer bevorzugten Ausführungsform in der durch die Trägerplatte vorgegebenen Anordnung in die Dichtkappen einspritzen. Die Dichtkappen sind dabei in einer frei wählbaren Anordnung auf der Trägerplatte befestigt, wobei diese Anordnung der Dichtkappen auf der Trägerplatte entweder vorher in die Software der Steuerungseinheit einprogrammiert wurde oder die Steuerungseinheit eine beispielsweise optische Erkennungseinheit umfasst, die während des oder vor dem Befüllen(s) der Dichtkappen in der Lage ist, die Position der anderen Dichtkappen zu bestimmen und entsprechend mit der Befülleinheit anzusteuern.

Die Anzahl der Dichtkappen auf der Trägerplatte ist in einem weiten Bereich variierbar und lediglich abhängig von der Größe der Dichtkappe im Hinblick auf die Größe der Trägerplatte. Die Dichtkappen können auf der Trägerplatte auch so positioniert sein, dass das Positionierungsbild auf der Trägerplatte dem Positionierungsbild der Nieten bzw. Nietköpfe auf dem tatsächlichen Bauteil ähnelt oder sogar entspricht. Dadurch kann das Erkennen der richtigen Position für die aufzubringende Dichtkappe erleichtert werden.

Der Roboter kann die Dichtmasse in einer bevorzugten Ausführungsform in der durch die Trägerplatte vorgegebenen Kontur in die Dichtkappen einspritzen.

Die Menge der einzuspritzenden Dichtmasse ist von den Anforderungen des Anwenders abhängig und kann für jede Dichtkappe entsprechend ihrer Geometrie und der Geometrie der Niete bzw. des Nietkopfes festgelegt werden. In einer bevorzugten Ausführungsform wird die standardisierte Menge vor dem Befüllen in einem geeigneten Programm der Steuereinheit für die jeweilige Dichtkappengröße eingespeichert. Auf Basis dieser eingespeicherten Daten kann die automatisierte Vorrichtung, vorzugsweise der Roboter dann die jeweils korrekte Menge in die Dichtkappe einfüllen.

Dadurch wird ein Über- bzw. Unterdosieren der Dichtkappe mit zu viel oder zu wenig Dichtmasse vermieden. Gleichzeitig wird auch das Betauen der auftauenden Dichtkappen mit angemischter Dichtmasse verhindert.

Die Auspress- bzw. Füllgeschwindigkeit der Dichtmasse bzw. die Fülldauer lässt sich vorzugsweise über entsprechende Einstellungen an der Vorrichtung, vorzugsweise dem Roboter einstellen. Vorzugsweise wird die Füllgeschwindigkeit an die Eigenschaften der Dichtmasse, insbesondere die Viskosität, die Fließeigenschaft und/oder den Fadenabriss, angepasst. Durch entsprechende Einstellungen soll ein optimiertes Füllbild (Höhe und Silhouette der Füllung in der Dichtkappe) erreicht werden, welches den Anforderungen des Anwenders, insbesondere den Oberflächenanforderungen an die Füllung, entspricht. In einer bevorzugten Ausführungsform ist die Oberfläche der Füllung aus Dichtmasse im Querschnitt plan oder eben und weist keine spitz zulaufende Erhöhung auf, die beispielsweise dann entsteht, wenn die Geschwindigkeit mit der die Befülleinheit von der Füllung abhebt nicht auf die Fadenabrisseigenschaften der Dichtmasse abgestimmt sind.

Auch die Aushärtegeschwindigkeit der Dichtmasse in der Dichtkappe kann durch Auswahl einer schnelleren Dichtmasse angepasst werden, was im Gegensatz dazu bei der Verwendung von tiefgefrorenen Dichtkappen nicht möglich ist.

Gemäß einer ersten ganz besonders bevorzugten Ausführungsform handelt es sich bei den Dichtkappen um Kunststoffkappen zur Abdichtung von Verbindungselementen im Flugzeugbau, welche zum überwiegenden Teil aus mindestens einem Hochleistungspolymer bestehen und eine Durchschlagsfestigkeit von mindestens 10 kV/mm nach DIN IEC 60243 aufweisen.

Diese Kunststoffkappen werden mit einer Dichtmasse gefüllt, welche ein hohes Energieabsorptionsvermögen sowie mindestens einen Füllstoff ausgewählt aus der Gruppe bestehend aus mit Gas und/oder Luft gefüllten Hohlfüllkörpern aufweist. Dabei sind die Kunststoffkappen und die Dichtmasse kohäsiv miteinander verbunden.

Derartige Dichtkappen fungieren als kombinierter Schutz gegen Treibstoff und Hydrauliköl, insbesondere solches basierend auf Tributylphosphat, sowie gegen Blitzschlag und können wirtschaftlich hergestellt sowie appliziert werden.

Dabei sollen die folgenden Definitionen gelten:
Wenn vorliegend von "Hochleistungspolymer" die Rede ist, sind Homo- sowie Copolymere gemeint, welche sich durch hohe Chemikalien- und Temperaturbeständigkeit auszeichnen.

Dass die "Kunststoffkappen [...] zum überwiegenden Teil aus mindestens einem Hochleistungspolymer besteht", bedeutet, dass sie noch einen Gehalt von weniger als 50 Gew.-% an anderen Bestandteilen enthalten können, bei denen es sich nicht um Hochleistungspolymere handelt.

Dass "die Kunststoffkappen und die Dichtmasse kohäsiv miteinander verbunden sind" ist in dem Sinne zu verstehen, dass die eingefüllte Dichtmasse und das mindestens eine Hochleistungspolymer sich nicht zerstörungsfrei trennen lassen oder sich unter den beim Betrieb eines Flugzeugs üblichen Bedingungen nicht trennen.

Das mindestens eine Hochleistungspolymer der Kunststoffkappen ist insbesondere ausgewählt aus der Gruppe bestehend aus Polyvinylidenfluorid (PVDF), Polysulfon (PSU), Polyphenylensulfon (PPSU), Polyetheretherketon (PEEK), Polyimid (PI), Polymamidimid (PAI), Polybenzimidazol (PBI), Polyetherimid (PEI) und Polyphenylensulfid (PPS).

Vorzugsweise ist die in die Kunststoffkappen gefüllte Dichtmasse eine solche auf Basis von Polysulfid und/oder Polythioether. Besonders bevorzugt handelt es sich bei ihr um ein Polysulfid und/oder einen Polythioether in Kombination mit Mangandioxid, einer Isocyanatverbindung, einem Isocyanatprepolymer und/oder einer Epoxidverbindung als Härter.

Die Verwendung von mit Gas und/oder Luft gefüllten Hohlfüllkörpern als Füllstoffe hat den Vorteil, dass diese durch den mikrozellulären Charakter energieabsorbierend wirken. Bei denen mit Gas und/oder Luft gefüllten Hohlfüllkörpern handelt es sich dabei bevorzugt um Microballons.

Bei derartigen Dichtkappen ist eine präzise Befüllung - wie sie durch die vorliegende Erfindung ermöglicht wird - besonders wichtig, da ausgetriebene Dichtmasse nicht beständig gegenüber Hydrauliköl ist.

Gemäß einer zweiten ganz besonders bevorzugten Ausführungsform handelt es sich bei den Dichtkappen um solche, die mit in der EP 2 586 537 A1 beschriebenen Düsen erzeugt wurden. Diese Düsen für die Applikation von Dichtmassen weisen eine glockenförmige oder haubenförmige Düsenspitze und einen Klemmring an der Einspritzseite eines länglichen Düsenelements auf. Das Einspritzen kann manuell oder mit automatisierten Dichtmassen-Einspritzmaschinen erfolgen.

## Patentansprüche

1. Verfahren zum Befüllen von Dichtkappen (Sealcaps), **dadurch gekennzeichnet, dass** die Befüllung der Dichtkappen automatisiert mittels einer Vorrichtung durchgeführt wird, die umfasst
- eine Befülleinheit, mit der die Dichtmasse in die Dichtkappen eingefüllt wird;
- eine Trägerplatte, auf der sich die ausgehärteten Dichtkappen befinden;
- eine Verfahrwegeinheit, mit der entweder die Befülleinheit und/oder die Trägerplatte bewegt werden können; und
- eine Steuereinheit, mit der die Bewegung der Befülleinheit und/oder der Trägerplatte und das Befüllen reguliert werden; wobei die Steuereinheit eine optische Erkennungseinheit umfasst,
wobei die Befülleinheit eine Kartuschenauspresseinheit mit Servoantrieb umfasst und wobei die Positionierung der Befülleinheit und/oder die Positionierung der ausgehärteten Dichtkappen mittels Bewegung in XYZ-Richtung sowie das Befüllen der Dichtkappen automatisiert erfolgt.

2. Verfahren nach Anspruch 1, **dadurch gekennzeichnet, dass** zum Befüllen eine Vorrichtung mit XYZ-Fahrweg, vorzugsweise ein Roboter mit XYZ-Fahrweg verwendet wird.

3. Verfahren nach Anspruch 1 oder 2, **dadurch gekennzeichnet, dass** der Roboter die Dichtmasse in der durch die Trägerplatte vorgegebenen Kontur in die Dichtkappen einspritzt.

4. Verfahren nach einem der vorhergehenden Ansprüche, **dadurch gekennzeichnet, dass** die einzuspritzende Menge an Dichtmasse vor dem Befüllen in einem geeigneten Programm der Steuereinheit für die jeweilige Dichtkappengröße eingespeichert wird.

5. Verfahren nach einem der vorhergehenden Ansprüche, **dadurch gekennzeichnet, dass** die Füllgeschwindigkeit an die Eigenschaften der Dichtmasse angepasst wird.

6. Verfahren nach einem der vorhergehenden Ansprüche, **dadurch gekennzeichnet, dass** es sich bei den Dichtkappen um Kunststoffkappen zur Abdichtung von Verbindungselementen im Flugzeugbau handelt, welche zum überwiegenden Teil aus mindestens einem Hochleistungspolymer bestehen und eine Durchschlagsfestigkeit von mindestens 10 kV/mm nach DIN IEC 60243 aufweisen und welche mit einer Dichtmasse gefüllt werden, welche ein hohes Energieabsorptionsvermögen sowie mindestens einen Füllstoff ausgewählt aus der Gruppe bestehend aus mit Gas und/oder Luft gefüllten Hohlfüllkörpern aufweist, wobei die Kunststoffkappen und die Dichtmasse kohäsiv miteinander verbunden sind.

7. Verfahren nach Anspruch 6, **dadurch gekennzeichnet, dass** das mindestens eine Hochleistungspolymer der Kunststoffkappen ausgewählt ist aus der Gruppe bestehend aus Polyvinylidenfluorid (PVDF), Polysulfon (PSU), Polyphenylensulfon (PPSU), Polyetheretherketon (PEEK), Polyimid (PI), Polymamidimid (PAI), Polybenzimidazol (PBI), Polyetherimid (PEI) und Polyphenylensulfid (PPS).

8. Verfahren nach Anspruch 6 oder 7, **dadurch gekennzeichnet, dass** die in die Kunststoffkappen gefüllte Dichtmasse eine solche auf Basis von Polysulfid und/oder Polythioether ist.

9. Verfahren nach einem der Ansprüche 6 bis 8, **dadurch gekennzeichnet, dass** es sich bei denen mit Gas und/oder Luft gefüllten Hohlfüllkörpern um Microballons handelt.

10. Vorrichtung zur Ausführung des Verfahrens nach einem der Ansprüche 1 bis 9, **dadurch gekennzeichnet, dass** die Vorrichtung umfasst:
- eine Befülleinheit, mit der die Dichtmasse in die Dichtkappe eingefüllt wird;
- eine Trägerplatte, auf der sich die ausgehärteten Dichtkappen befinden;
- eine Verfahrwegeinheit, mit der entweder die Befülleinheit und/oder die Trägerplatte bewegt werden können; und
- eine Steuereinheit, mit der die Bewegung der Befülleinheit und/oder der Trägerplatte und das Befüllen reguliert werden; wobei die Steuereinheit eine optische Erkennungseinheit umfasst,
wobei die Befülleinheit eine Kartuschenauspresseinheit mit Servoantrieb umfasst.

## Claims

1. A method for filling seal caps, which comprises filling the seal caps automatedly by means of a device which comprises
- a filling unit with which the sealant is filled into the seal caps;
- a support plate on which the cured seal caps are located;
- a displacement travel unit with which either the filling unit and/or the support plate can be moved; and
- a control unit with which the movement of the filling unit and/or of the support plate and the filling are regulated, wherein the control unit comprises an optical recognition unit,
wherein the filling unit comprises a cartridge extrusion unit with servo drive and wherein the positioning of the filling unit and/or the positioning of the cured seal caps by means of movement in XYZ direction as well as the filling of the seal caps take place automatedly.

2. The method according to claim 1, wherein filling is carried out using a device with XYZ travel, preferably a robot with XYZ travel.

3. The method according to claim 1 or 2, wherein the robot injects the sealant into the seal caps in the contour dictated by the support plate.

4. The method according to any of the preceding claims, wherein, prior to filling, the amount of sealant to be injected for the particular seal cap size is stored in a suitable program of the control unit.

5. The method according to any of the preceding claims, wherein the filling rate is adapted to the properties of the sealant.

6. The method according to any of the preceding claims, wherein the seal caps are plastic caps for the sealing of connecting elements in aircraft construction, said caps consisting predominantly of at least one high-performance polymer and having a DIN IEC 60243 breakdown strength of at least 10 kV/mm and being filled with a sealant which has high energy absorbency and also comprises at least one filler selected from the group consisting of hollow filling bodies filled with gas and/or air, the plastic caps and the sealant being joined cohesively to one another.

7. The method according to claim 6, wherein the at least one high-performance polymer of the plastic caps is selected from the group consisting of polyvinylidene fluoride (PVDF), polysulfone (PSU), polyphenylene sulfone (PPSU), polyetheretherketone (PEEK), polyimide (PI), polyamideimide (PAI), polybenzimidazole (PBI), polyetherimide (PEI), and polyphenylene sulfide (PPS).

8. The method according to claim 6 or 7, wherein the sealant filled into the plastic caps is a sealant based on polysulfide and/or polythioether.

9. The method according to any of claims 6 to 8, wherein the hollow filling bodies filled with gas and/or air are microballoons.

10. A device for performing the method according to any of claims 1 to 9, wherein the device comprises:
- a filling unit with which the sealant is filled into the seal cap;
- a support plate on which the cured seal caps are located;
- a displacement travel unit with which either the filling unit and/or the support plate can be moved; and
- a control unit with which the movement of the filling unit and/or of the support plate and the filling are regulated, wherein the control unit comprises an optical recognition unit,
wherein the filling unit comprises a cartridge extrusion unit with servo drive.

## Revendications

1. Procédé pour remplir des capuchons d'étanchéité (Sealcaps), **caractérisé en ce que** le remplissage des capuchons d'étanchéité est effectué de manière automatisée au moyen d'un dispositif qui comprend
- une unité de remplissage permettant de remplir les capuchons d'étanchéité avec le produit d'étanchéité ;
- une plaque de support sur laquelle se trouvent les capuchons d'étanchéité durcis ;
- une unité de déplacement permettant de déplacer soit l'unité de remplissage, soit la plaque de support, soit les deux ; et
- une unité de commande permettant de commander le déplacement de l'unité de remplissage et/ou de la plaque de support et le remplissage ; l'unité de commande comprenant une unité de détection optique,
l'unité de remplissage comprenant une unité de pressage de cartouche, à servocommande, et le positionnement de l'unité de remplissage et/ou le positionnement des capuchons d'étanchéité durcis, ainsi que le remplissage des capuchons d'étanchéité, s'effectuant de manière automatisée au moyen d'un déplacement dans la direction XYZ.

2. Procédé selon la revendication 1, **caractérisé en ce qu'**un dispositif à déplacement XYZ, de préférence un robot à déplacement XYZ, est utilisé pour le remplissage.

3. Procédé selon la revendication 1 ou la revendication 2, **caractérisé en ce que** le robot injecte le produit d'étanchéité dans les capuchons d'étanchéité selon le contour prédéfini par la plaque de support.

4. Procédé selon l'une des revendications précédentes, **caractérisé en ce que** la quantité de produit d'étanchéité à injecter est enregistrée avant le remplissage dans un programme approprié de l'unité de commande pour la taille respective des capuchons d'étanchéité.

5. Procédé selon l'une des revendications précédentes, **caractérisé en ce que** la vitesse de remplissage est adaptée aux propriétés du produit d'étanchéité.

6. Procédé selon l'une des revendications précédentes, **caractérisé en ce que** les capuchons d'étanchéité sont des capuchons en matière plastique destinés à l'étanchéification d'éléments de liaison dans la construction aéronautique, qui sont constitués en majeure partie d'au moins un polymère haute performance et qui présentent une résistance à la perforation d'au moins 10kV/mm selon la norme DIN IEC 60243, et qui sont remplis d'un produit d'étanchéité présentant une capacité d'absorption d'énergie élevée et au moins une charge choisie dans le groupe constitué par des corps creux remplis de gaz et/ou d'air, les capuchons en matière plastique et le produit d'étanchéité étant liés entre eux de manière cohésive.

7. Procédé selon la revendication 6, **caractérisé en ce que** ledit au moins un polymère haute performance des capuchons en matière plastique est choisi parmi le groupe constitué par le polyfluorure de vinylidène (PVDF), le polysulfone (PSU), le polyphénylène sulfone (PPSU), le polyétheréthercétone (PEEK), le polyimide (PI), le polyamide-imide (PAI), le polybenzimidazole (PBI), le polyétherimide (PEI) et le polyphénylène sulfure (PPS).

8. Procédé selon la revendication 6 ou la revendication 7, **caractérisé en ce que** le produit d'étanchéité rempli dans les capuchons en matière plastique est un matériau à base de polysulfure et/ou de polythioéther.

9. Procédé selon l'une des revendications 6 à 8, **caractérisé en ce que** les corps creux remplis de gaz et/ou d'air sont des microsphères.

10. Dispositif pour la mise en œuvre du procédé selon l'une des revendications 1 à 9, **caractérisé en ce que** le dispositif comprend :
- une unité de remplissage permettant de remplir le capuchon d'étanchéité avec le produit d'étanchéité ;
- une plaque de support sur laquelle se trouvent les capuchons d'étanchéité durcis ;
- une unité de déplacement permettant de déplacer soit l'unité de remplissage, soit la plaque de support, soit les deux ; et
- une unité de commande permettant de commander le déplacement de l'unité de remplissage et/ou de la plaque de support et le remplissage ; l'unité de commande comprenant une unité de détection optique,
l'unité de remplissage comprenant une unité de pressage de cartouche, à servocommande.
